# EUROPÄISCHE PATENTSCHRIFT

(11) **EP 3 142 890 B1**
(45) Veröffentlichungstag und Bekanntmachung des Hinweises auf die Patenterteilung: **16.12.2020**
(21) Anmeldenummer: 15734635.4
(22) Anmeldetag: 01.07.2015
(51) Int. Cl.: B60L 9/24, B60L 3/00

(54) **HOCHSPANNUNGSEINRICHTUNG FÜR EIN SCHIENENFAHRZEUG**
HIGH VOLTAGE DEVICE FOR A RAIL VEHICLE
DISPOSITIF À HAUTE TENSION POUR VÉHICULE FERROVIAIRE

(30) Priorität: 04.07.2014 DE 102014213073
(43) Veröffentlichungstag der Anmeldung: 22.03.2017
(73) Patentinhaber: Siemens Mobility GmbH, 81739 München (DE)
(72) Erfinder: DETTERBECK, Manfred, 90530 Wendelstein (DE)
(86) Internationale Anmeldenummer: PCT/EP2015/064917
(87) Internationale Veröffentlichungsnummer: WO 2016/001270

(56) Entgegenhaltungen:
- EP-A1- 2 332 785
- WO-A2-2012/098107
- DE-A1- 4 022 086
- GB-A- 849 213

## Beschreibung

Die Erfindung betrifft eine Hochspannungseinrichtung für ein Fahrzeug, welches zumindest im Fahrbetrieb eine elektrische Energie aus einer eine Hochspannung bereitstellenden Netzversorgung bezieht, mit zumindest einer Hochspannungskomponente, die mittels einer Hauptleistungsschalteinheit mit der Netzversorgung elektrisch verbindbar ist, und einer Erdungsschaltvorrichtung, welche zumindest ein Schaltmittel aufweist.

Es sind Fahrzeuge, insbesondere schienengebundene Fahrzeuge bekannt, die im Fahrbetrieb eine elektrische Energie aus einer Netzversorgung beziehen. Die Netzversorgung weist hierbei eine elektrische Leitung, wie z.B. eine Oberleitung oder eine im Bodenbereich angeordnete Stromschiene auf, mit welcher ein Stromabnehmer im Betrieb des Fahrzeugs in Kontakt steht. Die von der Netzversorgung geführte Spannung ist eine Hochspannung typischerweise in einem Bereich von 500 V bis 30 kV. Dem Stromabnehmer ist bekannterweise eine Hauptleistungsschalteinheit nachgeschaltet, die der elektrischen Anlage des Fahrzeugs vorgeschaltet und dazu ausgelegt ist, diese von der Netzversorgung insbesondere auch unter Last zu trennen.

Arbeiten an der Hochspannungseinrichtung des Fahrzeugs erfordern strenge Sicherheitsvorkehrungen. Insbesondere ist vorgeschrieben, dass Energiequellen, insbesondere die Netzversorgungsleitung sowie Komponenten des Fahrzeugs, die auch in getrenntem Zustand des Fahrzeugs von der Netzversorgung potentiell eine Hochspannung erzeugen können, bei solchen Arbeiten geerdet werden müssen. Herkömmlicherweise ist eine Erdungsschaltvorrichtung des Fahrzeugs vorgesehen, die mit der Hauptleistungsschalteinheit gekoppelt ist und dazu dient, den Ein- und Ausgang der Hauptleistungsschalteinheit, d.h. elektrische Verbindungen dieser zum Stromabnehmer einerseits und zur nachgeschalteten elektrischen Anlage des Fahrzeugs andererseits mit einem Referenzpotential, insbesondere dem Massepotential des Fahrzeugs elektrisch zu verbinden. DE4022086 lehrt ein Fahrzeug mit einer solchen Vorrichtung. Eine derartige Erdungsschaltvorrichtung ist typischerweise mittels Luft- und/oder Kriechstrecke von deren Umgebung isoliert, wodurch ein großer Bauraum für diese Isolierung in Anspruch genommen wird. Außerdem erfordern bekannte Erdungsschalterkonstruktionen mit geschmierten Schaltmitteln regelmäßig einen hohen Wartungsaufwand.

Bei Arbeiten an der Hauptleistungsschalteinheit und/oder der Erdungsschaltvorrichtung selbst - insbesondere bei den oben genannten, regelmäßigen Wartungsarbeiten, z.B. zu Schmierungszwecken - ist das Unfallrisiko höher, da die Erdungsfunktion der Erdungsschaltvorrichtung u.U. nicht mehr erbracht werden kann. Typischerweise werden die Hauptleistungsschalteinheit bzw. die Erdungsschaltvorrichtung abgeklemmt. Auch bei einer geerdeten elektrischen Leitung der Netzversorgung, z.B. bei geerdeter Oberleitung, birgt die eingeschränkte oder nicht vorhandene Funktionalität der Erdungsschaltvorrichtung die Gefahr eines Stromschlags aufgrund einer von einer internen Energiequelle fehlerhaft erzeugten Hochspannung.

Der Erfindung liegt die Aufgabe zugrunde, die Personensicherheit bei Arbeiten an der Hochspannungseinrichtung auf eine konstruktiv einfache Weise zu erhöhen.

Hierzu wird vorgeschlagen, dass die zumindest eine Hochspannungskomponente der Hochspannungseinrichtung zumindest einen Aufnahmebereich aufweist, in welchem das Schaltmittel der Erdungsschaltvorrichtung - wenigstens in einer zumindest ein aktives Teil der Hochspannungskomponente erdenden Erdungsstellung - aufgenommen ist. Dadurch kann eine erhöhte Sicherheit bei Arbeiten an der Hochspannungseinrichtung erreicht werden, insbesondere wenn diese Arbeiten an der Hauptleistungsschalteinheit vorgenommen werden. Auch bei diesen Arbeiten kann eine zuverlässige Erdung des zumindest einen aktiven Teils der Hochspannungskomponente erzielt werden. Dies kann außerdem durch die Integration des Schaltmittels in der Hochspannungskomponente - zumindest in dessen Erdungsstellung - auf eine konstruktiv einfache Weise erreicht werden. Besonders vorteilhaft kann die Hochspannungseinrichtung im Bereich der Hauptleistungsschalteinheit kompakter gebaut werden, da ein für die Erdungsschaltvorrichtung notwendiger Bauraum, insbesondere eine erforderliche Luft- und/oder Kriechstrecke entfallen kann. Typische Werte für klassische Luft- und Kriechstrecke sind 230mm bzw. 600m. Diese Bauraumersparnis kann vorteilhafterweise für eine Ausführung der Hochspannungseinrichtung - zumindest im Bereich der Hauptleistungsschalteinheit - als eine in einem Isoliermaterial eingekapselte Einrichtung genutzt werden.

Unter einer "Hochspannung" soll insbesondere eine elektrische Spannung im Bereich von 500 V bis 30kV verstanden werden. Die für die Versorgung elektrisch angetriebener Fahrzeuge von einer Netzversorgung bereitgestellte Hochspannung kann folgende typische Werte aufweisen. Typische Werte für Wechselspannungen liegen im Spannungsbereich zwischen 10kV und 30kV. Für Schienenfahrzeuge sind Spannungen in Höhe von 15kV oder 25kV breit eingesetzt. Für Gleichspannungen liegen die typischen Werte für eine Netzversorgung im Bereich von 500V bis 5kV. Breit verwendete Spannungswerte für die Versorgung von Schienenfahrzeugen sind insbesondere 750V, 1,5kV und 3kV.

Unter einer "Hochspannungskomponente" soll eine Komponente verstanden werden, welche zumindest ein Teil aufweist, das zur Führung einer Hochspannung ausgelegt ist.

Der Begriff "Hauptleistungsschalteinheit" in Bezug auf eine elektrische Anlage eines Fahrzeugs bezeichnet insbesondere eine Netzschaltereinheit, die eine elektrische Verbindung der elektrischen Anlage mit der Netzversorgung unterbrechen bzw. herstellen kann. Sie ist zweckmäßigerweise als Lastschalter ausgebildet, der dazu ausgelegt ist, die elektrische Verbindung unter einer Volllast der elektrischen Anlage zu trennen. Die Hauptleistungsschalteinheit führt im geschlossenen Zustand die von der Netzversorgung bereitgestellte Hochspannung und bildet daher eine Komponente der Hochspannungseinrichtung des Fahrzeugs. Bei Schienenfahrzeugen wird die Hauptleistungsschalteinheit in der fachmännischen Sprache insbesondere "Hauptschalter" genannt.

Die Hochspannungskomponente, in welcher der Aufnahmebereich zur Aufnahme des Schaltmittels der Erdungsschaltvorrichtung zumindest in Erdungsstellung vorgesehen ist, und die Hauptleistungsschalteinheit sind zweckmäßigerweise zwei unterschiedliche Hochspannungskomponenten der Hochspannungseinrichtung des Fahrzeugs. Insbesondere sind sie voneinander beabstandet angeordnet und/oder sie weisen jeweils eine unterschiedliche Umhausung auf.

Unter einem "aktiven" Teil der Hochspannungskomponente soll insbesondere ein Teil verstanden werden, welches zur Übertragung einer Energie, vorzugsweise zur Herstellung eines Energieflusses von der Netzversorgung zu elektrischen Verbrauchern, insbesondere zu zumindest einer Antriebseinheit des Fahrzeugs, beiträgt. Hierzu ist das aktive Teil insbesondere zur Führung eines elektrischen Stroms ausgelegt, über welchen eine elektrische Leistung der elektrischen Verbraucher erzeugt werden kann. Insbesondere soll ein aktives Teil von weiteren Komponenten der Hochspannungskomponente unterschieden werden, die eine Schutzfunktion aufweisen. Insbesondere unterscheidet sich ein aktives Teil der Hochspannungskomponente von einer Gehäuseeinheit, welche aufgrund von Berührungsschutzbestimmungen ggf. zu erden ist.

Unter einer "Erdung" soll insbesondere die Herstellung einer elektrischen Verbindung eines zur Spannungsführung ausgelegten aktiven Teils mit einem Referenzpotential verstanden werden. Dieses Referenzpotential kann dem Potential des Erdreichs, wobei es insbesondere "Erdpotential" genannt ist, bei Schienenfahrzeugen dem Gleispotential und/oder dem Potential einer bestimmten Einrichtung, z.B. eines Wagenkastens, des Fahrzeugs entsprechen, wobei es insbesondere "Massepotential" genannt ist.

Das Schaltmittel kann in einer elektrischen Verbindung geschaltet sein, durch welche das aktive Teil und die Hauptleistungsschalteinheit miteinander verbindbar sind. Es hat dabei eine geschlossene Stellung, in welcher diese elektrische Verbindung hergestellt ist, und eine offene Stellung, in welcher die elektrische Verbindung unterbrochen ist und das aktive Teil mit einem Referenzpotential verbunden ist. Die offene Stellung entspricht dabei der Erdungsstellung des Schaltmittels. Bevorzugt wird jedoch vorgeschlagen, dass das Schaltmittel in der Erdungsstellung zumindest eine elektrische Verbindung zwischen dem aktiven Teil und der Hauptleistungsschalteinheit erdet. Dadurch kann vorteilhafterweise eine Erdung zumindest des aktiven Teils der Hochspannungskomponente und der Hauptleistungsschalteinheit erreicht werden.

Der Aufnahmebereich ist zur Aufnahme des Schaltmittels wenigstens in der zumindest das aktive Teil der Hochspannungskomponente erdenden Erdungsstellung vorgesehen. Beispielsweise kann sich das Schaltmittel in einer Ausgangsstellung außerhalb des Aufnahmebereichs befinden, wobei es in einem Erdungsvorgang ausgehend von der Ausgangsstellung in den Aufnahmebereich bis Erreichen seiner Erdungsstellung eingefahren wird. In einer bevorzugten Ausbildung der Erfindung wird jedoch vorgeschlagen, dass das Schaltmittel im Aufnahmebereich eingekapselt ist. Dabei ist das Schaltmittel sowohl in einer Ausgangsstellung als auch in dessen Erdungsstellung im Aufnahmebereich angeordnet. Dadurch kann eine besonders kompakte Ausführung erreicht werden. Insbesondere kann der Aufnahmebereich zur Aufnahme des Schaltmittels dem Bereich der Hochspannungskomponente entsprechen, in welchem das aktive Teil angeordnet ist.

Vorzugsweise ist die Hochspannungskomponente als Spannungsumwandlungseinrichtung ausgebildet, welche dazu dient, ausgehend von der durch die Netzversorgung bereitgestellten Hochspannung eine von dieser unterschiedliche Spannung bereitzustellen. Dadurch kann der Aufnahmebereich in einer weit verbreiteten Komponente vorgesehen sein, die bei elektrischen Fahrzeugen eine zentrale Funktion aufweist und aufgrund deren typischer Abmessungen für die Implementierung des Aufnahmebereichs besonders geeignet ist. Zweckmäßigerweise entspricht die Hochspannungskomponente dabei einem Haupttransformator, welcher der Hauptleistungsschalteinheit nachgeschaltet ist und eine Energiequelle für die elektrischen Verbraucher, insbesondere zumindest eine Antriebseinheit und ein Bordnetz bildet.

In diesem Zusammenhang wird vorgeschlagen, dass die Hochspannungskomponente zu einer induktiven Spannungsumwandlung vorgesehen ist. Hierdurch kann eine besonders hohe Sicherheit erreicht werden. Eine derartige Hochspannungskomponente in der elektrischen Anlage des Fahrzeugs weist die Funktion einer Energiequelle auf, welche - auch bei geerdeter Netzversorgungsleitung - gefährliche hohe Spannungen potentiell führen kann. Diese Gefahr ist insbesondere gegeben, wenn Wechselspannungen auf der Sekundärseite fehlerhaft angelegt werden. Es besteht außerdem bei einer klassischen, gemäß dem Stand der Technik mit der Hauptleistungsschalteinheit gekoppelten Erdungsschaltvorrichtung eine Gefahr, wenn Wartungsarbeiten an der elektrischen Verbindung zwischen der Spannungsumwandlungseinrichtung, insbesondere dem Haupttransformator, und der klassischen Erdungsschaltvorrichtung (z.B. Arbeiten an Hochspannungssteckern, Hochspannungsleitungen, Endverschlüssen, Stromschienen usw.) vorgenommen werden, oder bei beschädigten Komponenten in dieser Verbindung. Dabei ist aufgrund von Rückspeisungen über die Spannungsumwandlungseinrichtung möglich, dass die klassische, zwar funktionstüchtige Erdungsschaltvorrichtung ihre Funktion nicht erbringen kann.

In einer bevorzugten Ausführung der Erfindung wird vorgeschlagen, dass die Hochspannungskomponente zumindest ein Kühl- und/oder Isoliermaterial aufweist, welches dazu vorgesehen ist, das aktive Teil zu kühlen bzw. elektrisch zu isolieren, wobei das Kühl- und/oder Isoliermaterial zur elektrischen Isolierung des Schaltmittels dient. Hierdurch kann durch den Einsatz eines Materials sowohl für das aktive Teil der Hochspannungskomponente als auch für das Schaltmittel der Erdungsschaltvorrichtung - zumindest in dessen Nicht-Erdungsstellung - ein zusätzlicher Bauraum eingespart werden.

Insbesondere ist der Aufnahmebereich für das Schaltmittel mit dem Kühl- und/oder Isoliermaterial zumindest teilweise gefüllt. Dabei ist vorteilhaft, wenn der Aufnahmebereich für das Schaltmittel dem Bereich der Hochspannungskomponente entspricht, in welchem zumindest das aktive Teil und vorzugsweise weitere Komponenten angeordnet sind.

In einer vorteilhaften Ausführung der Erfindung ist das Kühl- und/oder Isoliermaterial als Kühl- und/oder Isolierflüssigkeit ausgebildet. Ist es als Öl ausgebildet, kann dieses zusätzlich als Schmiermittel hinsichtlich von Betätigungsvorgängen des Schaltmittels dienen. Dadurch kann eine möglichst wartungsfreie Erdungsschaltvorrichtung erreicht werden.

In einer weiteren Ausführung ist der Einsatz eines als Feststoff ausgebildeten Isoliermaterials für das Schaltmittel denkbar. Das Isoliermaterial kann dabei den Aufnahmebereich umfassen oder es kann den Aufnahmebereich bilden, indem beispielsweise der Aufnahmebereich einem im Isoliermaterial ausgesparten, hohlen Bereich für das Schaltmittel entspricht.

Es wird ein Ausführungsbeispiel der Erfindung anhand der Zeichnungen näher erläutert. Es zeigen:
- Figur 1:: ein Schienenfahrzeug mit einer elektrischen Schaltung in einer schematischen Seitenansicht und
- Figur 2:: eine Hochspannungskomponente des Schienenfahrzeugs, mit einer Erdungsschaltvorrichtung.

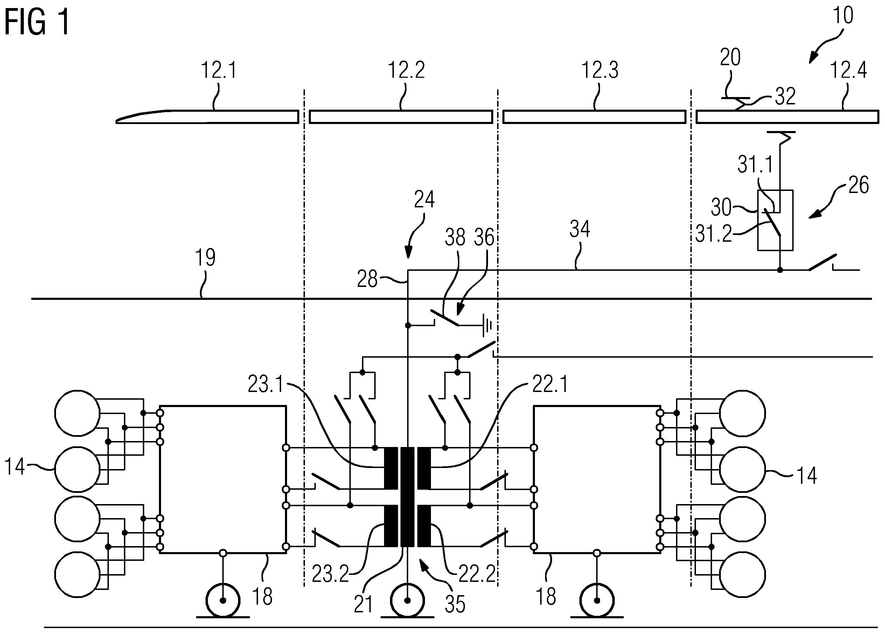

Figur 1 zeigt ein als Schienenfahrzeug 10 ausgebildetes Fahrzeug und eine elektrische Schaltung desselben in einer stark schematischen Seitenansicht. Das Schienenfahrzeug 10 ist als Triebzug mit mehreren Wagen 12.1 bis 12.4 ausgebildet. Es ist in der Zeichnung nur eine Hälfte des das Schienenfahrzeug 10 bildenden Verbands von Wagen dargestellt, wobei die zweite Hälfte grundsätzlich spiegelsymmetrisch zur ersten Hälfte ausgebildet ist. Die folgende Beschreibung beschränkt sich daher auf die Ausführung der ersten Fahrzeughälfte. In beiden Hälften ist der Kopfwagen 12.1 und ein Mittelwagen 12.3 mit Antriebsmotoren 14 ausgestattet. Diese sind in einem Traktionsbetrieb jeweils mit einer Radachse zum Antreiben derselben mechanisch gekoppelt, wobei Paare von Antriebsmotoren 14 jeweils in einem Triebdrehgestell angeordnet sind.

Die Antriebsmotoren 14 werden im Traktionsbetrieb bekannterweise mittels einer Leistungsversorgungseinheit 18 mit elektrischer Leistung versorgt, wobei separate Einheiten 18 jeweils in den angetriebenen Wagen 12.1 und 12.3 jeweils für zwei Paare von Antriebsmotoren 14 bzw. für die Triebdrehgestelle dieser Wagen vorgesehen sind. Die Leistungsversorgungseinheiten 18 enthalten vorzugsweise zumindest einen Gleichrichter und einen Pulswechselrichter, welche jeweils von Komponenten einer Leistungselektronik gebildet sind. Diese Komponenten sind im Stand der Technik bekannt und werden in den Figuren und diesem Text nicht näher dargestellt. Die Leistungsversorgungseinheiten 18 nehmen physikalisch jeweils die Form eines Traktionsstromrichercontainers an, welcher in der Zeichnung mit dessen Ein- und Ausgängen dargestellt ist. Diese Container sind in der betrachteten Ausführung unterhalb des Fahrzeugdachs 19 angeordnet, wobei sie im Unterflurbereich oder - insbesondere bei einem doppelstöckigen Fahrzeug - im Wagenkasten angeordnet sein können. Alternativ kann zumindest einer dieser Container auf dem Fahrzeugdach angeordnet sein.

Die Leistungsversorgungseinheiten 18 beziehen eine elektrische Energie über ein elektrisches Signal, welches von einer Spannungsumwandlungseinrichtung bereitgestellt wird. Diese entspricht in der klassischen Auslegung einer Traktionsanlage eines elektrischen Schienenfahrzeugs dem sogenannten "Haupttransformator". Dieser ist zur induktiven Umwandlung einer von einer Netzversorgung 20 abgegriffenen Hochspannung in eine unterschiedliche, heruntertransformierte Spannung vorgesehen, welche zu Eingängen der Leistungsversorgungseinheiten 18 geführt wird. Hierzu weist die Spannungsumwandlungseinrichtung eine Primärwicklung 21, welche die Hochspannung der Netzversorgung 20 führt, und Sekundärwicklungen 22.1, 22.2, 23.1, 23.2 auf, welche die heruntertransformierte Spannung führen. Ein Paar von Sekundärwicklungen 22.1, 22.2 ist der Leistungsversorgungseinheit 18 des Mittelwagens 12.3 zugeordnet, während ein weiteres Paar von Sekundärwicklungen 23.1, 23.2 der Leistungsversorgungseinheit 18 des Kopfwagens 12.1 zugeordnet ist.

Die Primärwicklung 21 der Spannungsumwandlungseinrichtung führt wie oben beschrieben die Netzspannung, welche von der Netzversorgung 20 abgegriffen wird. Die Spannungsumwandlungseinrichtung ist daher eine Hochspannungskomponente 24 der Hochspannungseinrichtung 26 des Schienenfahrzeugs 10. Die Hochspannungskomponente 24 ist in der betrachteten Ausführung unterhalb des Dachs 19 angeordnet und kann wie oben für die Leistungsversorgungseinheiten 18 bereits erörtert im Unterflurbereich oder im Wagenkasten angeordnet sein. Die Netzspannung wird zur Primärwicklung 21 mittels einer elektrischen Verbindung 28 geführt. Diese verbindet die Primärwicklung 21 mit einer Hauptleistungsschalteinheit 30, welche dazu dient, die Versorgung der elektrischen Anlage des Schienenfahrzeugs 10 mit der Hochspannung der Netzversorgung 20 zu unterbrechen bzw. herzustellen. In der fachmännischen Sprache ist die Hauptleistungsschalteinheit 30 auch "Hauptschalter" genannt. Diese kann in einer bekannten Ausführung zueinander bewegliche Kontaktmittel 31.1, 31.2, die insbesondere in einer Vakuumkammer oder in einer mit Gas gefüllten Kammer angeordnet sind, und eine Antriebseinheit zum Bewirken einer relativen Bewegung der Kontaktmittel 31.1, 31.2 aufweisen (in der Figur nicht näher gezeigt). Die Hauptleistungsschalteinheit 30 ist eine weitere, von der Hochspannungskomponente 24 unterschiedliche und bautechnisch getrennte Hochspannungskomponente der Hochspannungseinrichtung 26. Mittels der Hauptleistungsschalteinheit 30 kann die als Spannungsumwandlungseinrichtung ausgebildete Hochspannungskomponente 24 mit der Netzversorgung 20 elektrisch verbunden werden bzw. von dieser getrennt werden. Ein elektrischer Kontakt des Schienenfahrzeugs 10 mit der Netzversorgung 20 erfolgt bekannterweise mittels einer Kontakteinheit 32, die in der dargestellten Ausführung der Netzversorgung 20 mit einer Oberleitung als dachabgestützter Stromabnehmer ausgeführt ist. Die Kontakteinheit 32 ist eine weitere Hochspannungskomponente der Hochspannungseinrichtung 26 des Schienenfahrzeugs 10. In einer weiteren Ausführung kann die Netzversorgung 20 mit einer im Gleisbettbereich angeordneten Stromschiene ausgebildet sein.

Bezüglich eines zumindest in einem Traktionsbetrieb des Schienenfahrzeugs 10 vorliegenden Energieflusses von der Netzversorgung 20 zu zumindest einer der Leistungsversorgungseinheiten 18 sind die Kontakteinheit 32, die Hauptleistungsschalteinheit 30 und die Hochspannungskomponente 24 in Reihe hintereinander angeordnet. Anders ausgedrückt ist die Hauptleistungsschalteinheit 30 - bezüglich dieses Energieflusses - zwischen der Hochspannungskomponente 24 und der Kontakteinheit 32 geschaltet. In der betrachteten Ausführung des Schienenfahrzeugs 10 als Triebzug weist die Hochspannungseinrichtung 26 des Schienenfahrzeugs 10 eine Hochspannungsstromschiene 34 auf, die dazu vorgesehen ist, die Hochspannung der Netzversorgung 20 auf mehrere Wagen 12 zu verteilen. Sie dient insbesondere dazu, die über die Kontakteinheit 32 abgegriffene Hochspannung zu einer weiteren Hochspannungskomponente, die der Hochspannungskomponente 24 in der anderen, nicht gezeigten Zughälfte entspricht, zu führen. Die elektrische Verbindung 28 zwischen der Hochspannungskomponente 24 und der Hauptleistungsschalteinheit 30 erfolgt über einen Teil der Hochspannungsstromschiene 34.

Die Hochspannungseinrichtung 26 des Schienenfahrzeugs 10 weist ferner eine Erdungsschaltvorrichtung 36 auf, die dazu dient, zumindest einen Teil der Hochspannungseinrichtung 26 zu erden. Diese weist ein betätigbares Schaltmittel 38 auf, durch welches ein aktives Teil 35 der Hochspannungskomponente 24 mit dem Massepotential des Schienenfahrzeugs 10 elektrisch verbindbar ist. Das aktive Teil 35 der Hochspannungskomponente 24 ist zumindest von der Primärwicklung 21 gebildet. In der Erdungsstellung des Schaltmittels 38 ist eine elektrische Verbindung zwischen der elektrischen Verbindung 28 und dem Massepotential hergestellt, wodurch die elektrische Verbindung 28 und mit ihr das aktive Teil 35 der Hochspannungskomponente 24 und die Hauptleistungsschalteinheit 30 geerdet sind.

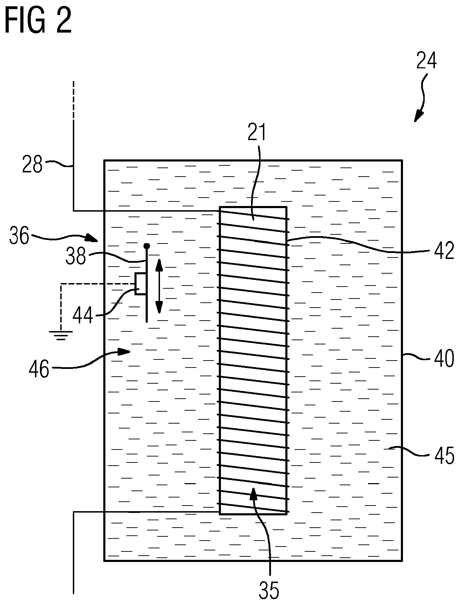

Die Hochspannungskomponente 24 und die Erdungsschaltvorrichtung 36 sind in Figur 2 näher dargestellt. Wie oben beschrieben ist die Hochspannungskomponente 24 als Transformator ausgebildet. Sie weist eine Gehäuseeinheit 40 auf, welche die internen Komponenten, insbesondere zumindest die Primärwicklung 21 - daher das aktive Teil 35 - und die Sekundärwicklungen sowie einen Kern 42 umfasst. In der fachmännischen Sprache ist die Gehäuseeinheit 40 bei der betrachteten Ausführung der Hochspannungskomponente 24 als Transformator auch "Transformatorkessel" genannt. In der Figur sind stark schematisch der Kern 42 und die Primärwicklung 21 in einer Seitenansicht dargestellt. Es ist ferner die elektrische Verbindung 28 gezeigt, welche das aktive Teil 35 bzw. die Primärwicklung 21 mit der Hauptleistungsschalteinheit 30, insbesondere über die Hochspannungsstromschiene 34 verbindet.

Wie oben beschrieben dient das Schaltmittel 38 der Erdungsschaltvorrichtung 36 - in dessen Erdungsstellung - die elektrische Verbindung 28 und mit ihr das aktive Teil 35 der Hochspannungskomponente 24 mit dem Massepotential zu verbinden und daher zu erden. Die Erdungsschaltvorrichtung 36 mit dem Schaltmittel 38 ist in der Figur stark schematisch dargestellt. Das Schaltmittel 38 ist mit einem elektrischen Leiter 44 verbunden, welcher geerdet ist. Beispielsweise kann dieser elektrische Leiter 44 von der Gehäuseeinheit 40 gebildet sein. Alternativ kann der Leiter 44 von der Gehäuseeinheit 40 separat ausgeführt sein. In einer Ausgangsstellung ist das Schaltmittel 38 von der elektrischen Verbindung 28 getrennt. Ausgehend von der in der Figur dargestellten Ausgangsstellung wird es zu einer Bewegung relativ zum festen Leiter 44 in die Erdungsstellung angetrieben, in welcher es die elektrische Verbindung 28 kontaktiert und dabei eine elektrische Verbindung zwischen dieser Verbindung 28 und dem geerdeten Leiter 44 herstellt. Die Betätigung kann manuell, teilautomatisch oder vollautomatisch erfolgen. Betätigungsmittel hierzu sind in der Figur nicht näher dargestellt.

Die Gehäuseeinheit 40 umschließt die internen Komponenten der Hochspannungskomponente 24, d.h. insbesondere die Primärwicklung 21, die Sekundärwicklungen 22, 23 und den Kern 42. Die Hochspannungskomponente 24 ist als flüssigkeitsgekühlter Transformator ausgebildet. Die oben genannten Komponenten der Hochspannungskomponente 24 sind in einem Bad eines flüssigen Kühl- und Isoliermaterials 45 angeordnet. Insbesondere ist dieses Material 45 als dielektrisches Öl ausgebildet.

Die Gehäuseeinheit 40 bildet außerdem einen Aufnahmebereich 46 für das Schaltmittel 38. Dieser Aufnahmebereich 46, in welchem das Schaltmittel 38 der Erdungsschaltvorrichtung 36 aufgenommen ist, entspricht dabei dem Aufnahmebereich für die oben genannten Komponenten der Hochspannungskomponente 24, d.h. insbesondere für den Kern und die Wicklungen, wobei dieser Aufnahmebereich das Kühl- und Isoliermaterial 45 enthält. Das Schaltmittel 38 ist demnach wie die Komponenten der Hochspannungskomponente 24 im Bad des Kühl- und Isoliermaterials 45 angeordnet. Das verwendete Öl dient dabei besonders vorteilhaft als Schiermittel hinsichtlich von Gleitbewegungen, die bei der Betätigung des Schaltmittels 38 stattfinden.

In der obigen Beschreibung wurde ein Schienenfahrzeug beschrieben, welches als Triebzug ausgebildet ist. In einer weiteren Ausführung kann das Schienenfahrzeug als Triebfahrzeug ausgebildet sein, z.B. als Lokomotive oder als Triebkopf eines Verbands, in welchem die Traktionsanlage des Verbands konzentriert angeordnet ist. Die Erfindung kann auch bei weiteren Fahrzeugen Anwendung finden, wie beispielsweise bei Oberleitungsbussen.

## Patentansprüche

1. Hochspannungseinrichtung für ein Fahrzeug, welches zumindest im Fahrbetrieb eine elektrische Energie aus einer eine Hochspannung bereitstellenden Netzversorgung (20) bezieht, mit zumindest einer Hochspannungskomponente (24), die als eine Spannungsumwandlungseinrichtung ausgebildet ist, welche ausgehend von der durch die Netzversorgung (20) bereitgestellten Hochspannung eine von dieser unterschiedliche Spannung bereitstellt, und die mittels einer Hauptleistungsschalteinheit (30) mit der Netzversorgung (20) elektrisch verbindbar ist, und einer Erdungsschaltvorrichtung (36), welche zumindest ein Schaltmittel (38) aufweist, wobei das Schaltmittel (38) in einer Erdungsstellung zumindest eine elektrische Verbindung (28) zwischen einem aktiven Teil (35) der Hochspannungskomponente (24) und der Hauptleistungsschalteinheit (30) erdet,
**dadurch gekennzeichnet, dass**
die Hochspannungskomponente (24) zumindest einen Aufnahmebereich (46) aufweist, in welchem das Schaltmittel (38) - wenigstens in der zumindest das aktive Teil (35) der Hochspannungskomponente (24) erdenden Erdungsstellung - aufgenommen ist.

2. Hochspannungseinrichtung nach Anspruch 1,
**dadurch gekennzeichnet, dass**
das Schaltmittel (38) im Aufnahmebereich (46) eingekapselt ist.

3. Hochspannungseinrichtung nach Anspruch 1,
**dadurch gekennzeichnet, dass**
die Hochspannungskomponente (24) zu einer induktiven Spannungsumwandlung vorgesehen ist.

4. Hochspannungseinrichtung nach einem der vorhergehenden Ansprüche,
**dadurch gekennzeichnet, dass**
die Hochspannungskomponente (24) zumindest ein Kühl- und/oder Isoliermaterial (45) aufweist, welches dazu vorgesehen ist, das aktive Teil (35) zu kühlen bzw. elektrisch zu isolieren, wobei das Kühl- und/oder Isoliermaterial (45) zur elektrischen Isolierung des Schaltmittels (38) dient.

5. Hochspannungseinrichtung nach Anspruch 4,
**dadurch gekennzeichnet, dass**
der Aufnahmebereich (46) mit dem Kühl- und/oder Isoliermaterial (45) zumindest teilweise gefüllt ist.

6. Hochspannungseinrichtung nach Anspruch 5,
**dadurch gekennzeichnet, dass**
das Kühl- und/oder Isoliermaterial (45) als Kühl- und/oder Isolierflüssigkeit ausgebildet ist.

7. Hochspannungseinrichtung nach Anspruch 6,
**dadurch gekennzeichnet, dass**
das Kühl- und/oder Isoliermaterial (45) als Öl ausgebildet ist.

8. Fahrzeug, insbesondere Schienenfahrzeug, mit einer Hochspannungseinrichtung nach einem der vorhergehenden Ansprüche.

## Claims

1. High voltage device for a vehicle which at least during driving operation is supplied with electrical energy from a power system (20) providing a high voltage, having at least one high voltage component (24) which is embodied as a voltage conversion device which, starting from the high voltage provided by the power system (20), provides a voltage different therefrom, and which by means of a main power switching unit (30) can be electrically connected to the power system (20), and an earthing switching device (36) which has at least one switching means (38), wherein in an earthing position the switching means (38) earths at least one electrical connection (28) between an active section (35) of the high voltage component (24) and the main power switching unit (30),
**characterised in that**
the high voltage component (24) has at least one receiving region (46) in which the switching means (38) is accommodated - at least in an earthing position that earths at least the active section (35) of the high voltage component (24).

2. High voltage device according to claim 1,
**characterised in that**
the switching means (38) is encapsulated in the receiving region (46).

3. High voltage device according to claim 1,
**characterised in that**
the high voltage component (24) is provided for an inductive voltage conversion.

4. High voltage device according to one of the preceding claims,
**characterised in that**
the high voltage component (24) has at least one cooling and/or insulating material (45) which is provided respectively to cool or electrically insulate the active section (35),
wherein the cooling and/or insulating material (45) serves for the electrical insulation of the switching means (38).

5. High voltage device according to claim 4,
**characterised in that**
the receiving region (46) is filled at least partially with the cooling and/or insulating material (45).

6. High voltage device according to claim 5,
**characterised in that**
the cooling and/or insulating material (45) is embodied as a cooling and/or insulating liquid.

7. High voltage device according to claim 6,
**characterised in that**
the cooling and/or insulating material (45) is embodied as oil.

8. Vehicle, in particular rail vehicle, having a high voltage device according to one of the preceding claims.

## Revendications

1. Dispositif à haute tension d'un véhicule, qui, au moins en position de marche, reçoit une énergie électrique d'une alimentation (20) de réseau mettant à disposition une haute tension, comprenant au moins un composant (24) à haute tension, constitué sous la forme d'un dispositif de transformation de la tension, qui, à partir de la haute tension mise à disposition par l'alimentation (20) de réseau, donne une tension, qui en est différente et qui peut être reliée électriquement à l'alimentation (20) de réseau au moyen d'une unité (30) de coupure de puissance principale et un système (36) de mise à la terre, qui a au moins un moyen (38) de coupure, le moyen (38) de coupure mettant à la terre, dans une position de mise à la terre, au moins une liaison (28) électrique entre une partie (35) active du composant (24) à haute tension et l'unité (30) de coupure de puissance principale,
**caractérisé en ce que**
le composant (24) à haute tension a au moins une partie (46) de réception, dans laquelle le moyen (38) de coupure est reçu, au moins dans la position de mise à la terre, mettant à la terre au moins la partie (35) active du composant (24) à haute tension.

2. Dispositif à haute tension suivant la revendication 1,
**caractérisé en ce que**
le moyen (38) de coupure est enfermé dans la partie (46) de réception.

3. Dispositif à haute tension suivant la revendication 1,
**caractérisé en ce que**
le composant (24) à haute tension est prévu pour une transformation inductive de la tension.

4. Dispositif à haute tension suivant l'une des revendications précédentes,
**caractérisé en ce que**
le composant (24) à haute tension a au moins un matériau (45) de refroidissement et/ou isolant, prévu pour refroidir la partie (35) active ou l'isoler électriquement, le matériau (45) de refroidissement et/ou isolant servant à l'isolation électrique du moyen (38) de coupure.

5. Dispositif à haute tension suivant la revendication 4,
**caractérisé en ce que**
la partie (46) de réception est emplie, au moins en partie, du matériau (45) de refroidissement et/ou isolant.

6. Dispositif à haute tension suivant la revendication 5,
**caractérisé en ce que**
le matériau (45) de refroidissement et/ou isolant est constitué sous la forme d'un liquide de refroidissement et/ou isolant.

7. Dispositif à haute tension suivant la revendication 6,
**caractérisé en ce que**
le matériau (45) de refroidissement et/ou isolant est constitué sous la forme d'une huile.

8. Véhicule, notamment véhicule ferroviaire, ayant un dispositif à haute tension suivant l'une des revendications précédentes.
